(19) Europäisches Patentamt
European Patent Office
Office européen des brevets

(11) EP 2 212 368 B1

(12) **FASCICULE DE BREVET EUROPEEN**

(45) Date de publication et mention de la délivrance du brevet:
**18.04.2012 Bulletin 2012/16**

(21) Numéro de dépôt: **08857118.7**

(22) Date de dépôt: **17.11.2008**

(51) Int Cl.:
***C08G 18/70*** *(2006.01)* ***C08K 5/52*** *(2006.01)*
***C08K 5/521*** *(2006.01)* ***C08L 75/04*** *(2006.01)*
***C09D 175/04*** *(2006.01)*

(86) Numéro de dépôt international:
**PCT/FR2008/052065**

(87) Numéro de publication internationale:
**WO 2009/071784 (11.06.2009 Gazette 2009/24)**

(54) **NOUVELLES COMPOSITIONS POLYISOCYANATES HYDROPHILES A BASE D'ESTERS DE PHOSPHATE**

NEUARTIGE HYDROPHILE POLYISOCYANATZUSAMMENSETZUNGEN AUF BASIS VON PHOSPHATESTERN

NOVEL HYDROPHILIC POLYISOCYANATE COMPOSITIONS BASED ON PHOSPHATE ESTERS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **20.11.2007 FR 0759173**

(43) Date de publication de la demande:
**04.08.2010 Bulletin 2010/31**

(73) Titulaire: **Perstorp France**
**69800 Saint-Priest (FR)**

(72) Inventeurs:
- **BERNARD, Jean-Marie**
  **F-69440 Saint-Laurent d'Agny (FR)**
- **OLIER, Philippe**
  **F-69007 Lyon (FR)**

(74) Mandataire: **Colombet, Alain André et al**
**Cabinet Lavoix**
**62, rue de Bonnel**
**69448 Lyon Cedex 03 (FR)**

(56) Documents cités:
**WO-A-02/22703 WO-A-97/31960**
**WO-A-98/56843**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 212 368 B1

## Description

La présente invention concerne de nouvelles compositions polyisocyanates hydrophiles à base d'esters de phosphate, leur procédé de préparation, ainsi que leur utilisation pour la préparation de revêtements, et en particulier de peintures ou vernis.

Les domaines d'application dans lesquels interviennent des revêtements sont d'une très grande diversité et requièrent de plus en plus des compositions pour revêtement de très haute technicité, possédant d'excellentes qualités tant sur le plan de l'application du revêtement que sur les caractéristiques du produit fini.

Il est sans cesse demandé des revêtements possédant des propriétés améliorées, en particulier possédant une vitesse de séchage accrue, une plus grande résistance aux impacts et aux chocs et un comportement amélioré vis-à-vis des agressions chimiques de toutes sortes, organiques, microbiennes ou atmosphériques, ainsi qu'une résistance améliorée aux lavages sous pression, en particulier pour les substrats en matières plastiques.

La demande internationale WO 97/31960 au nom de la Société Demanderesse décrit des mélanges de monoesters et de diesters de phosphate éthoxylés.

Par ailleurs, la demande internationale WO 98/56843 décrit une composition à base de polyisocyanates comprenant de la triéthylamine et un mélange de mono- et di-(2-éthylhexyl)phosphate avec 40% en moles de monoester, ainsi qu'une composition à base de polyisocyanates comprenant de la triéthylamine et un mélange de mono- et di-(2-éthylhexyl)phosphate avec 45% en moles de monoester.

La présente invention a pour but de fournir de nouvelles compositions polyisocyanates permettant d'obtenir des revêtements présentant des propriétés satisfaisantes d'homogénéité et de brillance.

La présente invention a pour but de fournir de nouvelles compositions polyisocyanates qui vont permettre, une fois appliquées sur un substrat, d'obtenir un revêtement apportant une fonction protectrice ou esthétique.

La présente invention concerne une composition comprenant :

- au moins un (poly)isocyanate et
- au moins un tensioactif comprenant une amine et un mélange de composés répondant aux formules (I) et (II) suivantes :

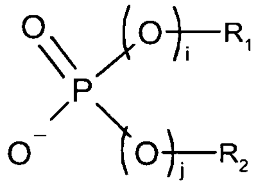

(I)

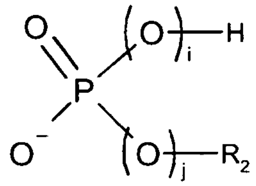

(II)

dans lesquelles :

- i et j représentent, indépendamment l'un de l'autre, 0 ou 1 ;
- $R_1$ et $R_2$, identiques ou différents, représentent, indépendamment l'un de l'autre, une chaîne hydrocarbonée, avantageusement choisie parmi les groupes aryles en $C_6$-$C_{30}$ et les groupes alkyles en $C_1$-$C_{20}$, éventuellement substitués, avantageusement groupes alkyles en $C_4$-$C_{10}$ éventuellement substitués par au moins un halogène, notamment un fluor ;

ledit mélange de composés de formule (I) et (II) étant caractérisé en ce que le ratio molaire entre le composé (II), c'est-à-dire le composé de type monoester, et le composé (I), c'est-à-dire le composé de type diester, est supérieur à 1, et est de préférence compris de 1 à 10, et avantageusement de 2 à 6.

Les compositions selon l'invention sont dénommées ci-après compositions polyisocyanates hydrophiles à base d'esters de phosphate.

Le choix d'un ratio molaire spécifique monoester / diester est important car il permet d'assurer l'obtention d'un film présentant un bon aspect et une brillance élevée, ledit film étant obtenu à partir du mélange desdites compositions polyisocyanates hydrophiles avec un polyol ou polyuréthane hydrodispersible (PUD) en présence éventuelle d'un solvant.

La composition de (poly)isocyanates comprise dans la composition selon la présente invention consiste en tout isocyanate et polyisocyanate, seul ou en mélange avec un ou plusieurs autres isocyanates et/ou polyisocyanates. Le terme "(poly)isocyanate" doit être compris ici comme regroupant les termes "isocyanate" et "polyisocyanate".

Avantageusement, le tensioactif est choisi de manière qu'il ne comporte pas ou peu de fonction réactive avec

le (poly)isocyanate. Autrement dit, le tensioactif est présent dans la composition solvantée sous forme essentiellement libre (par opposition à une forme liée par l'intermédiaire d'une liaison chimique avec le (poly)isocyanate).

L'expression "forme essentiellement libre" signifie que moins de 50 %, avantageusement moins de 20 %, de préférence moins de 10 % en masse de l'agent tensioactif est sous forme liée.

Toutefois, les compositions sous forme de solution dans lesquelles le tensioactif est totalement lié, de manière covalente, aux (poly)isocyanates, sont également comprises dans le champ de la présente invention.

Une composition avantageuse selon la présente invention comprend un tensioactif dans lequel l'amine est une amine de formule (III) suivante :

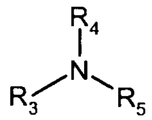

(III)

dans laquelle $R_3$, $R_4$ et $R_5$ représentent, indépendamment l'un de l'autre, H ou une chaîne hydrocarbonée, avantageusement choisie parmi les groupes aryles en $C_6$-$C_{30}$ et les groupes alkyles en $C_1$-$C_{20}$, éventuellement substitués, notamment par au moins un halogène, de préférence un fluor, lesdits groupes alkyles pouvant être cycliques, linéaires ou ramifiés,

les groupes $R_3$, $R_4$ et $R_5$ pouvant le cas échéant comprendre au moins un groupement oxyde d'alkylène, et de préférence au moins un groupe oxyde d'éthylène.

Il est également possible que les groupes $R_3$, $R_4$ et $R_5$ forment des cycles entre eux. Ainsi, $R_3$ et $R_4$ ou $R_4$ et $R_5$ ou $R_3$ et $R_5$ peuvent former ensemble un cycle constitué de préférence de 3 à 5 atomes de carbone, et contenant éventuellement au moins un hétéroatome de préférence choisi parmi l'oxygène ou le soufre. Parmi ces cycles, on peut citer : N-éthyl morpholine, N-méthyl morpholine et 1,2,2,6,6-pentaméthylpipéridine.

De façon avantageuse, dans la formule (III) susmentionnée, $R_3$, $R_4$ et $R_5$ représentent, indépendamment l'un de l'autre, un groupe aryle en $C_6$-$C_{30}$ ou un groupe alkyle en $C_1$-$C_{20}$. A titre d'exemples d'amine pouvant convenir dans le cadre de l'invention, on peut citer la N,N-diméthylcyclohexylamine, l'éthyldiisopropylamine, la diméthylbutylamine, la diméthylbenzylamine etc.

Ce mode de réalisation correspond aux amines hydrophobes. De telles amines ne contiennent donc pas de groupement oxyde d'alkylène.

Selon un autre mode de réalisation avantageux, la composition telle que définie ci-dessus comprend une amine de formule (III) dans laquelle au moins un des groupes $R_3$, $R_4$ et $R_5$ comprend au moins un groupement oxyde d'alkylène, et de préférence au moins un groupe oxyde d'éthylène.

Selon un autre mode de réalisation avantageux, la composition telle que définie ci-dessus comprend une amine de formule (III-1) suivante :

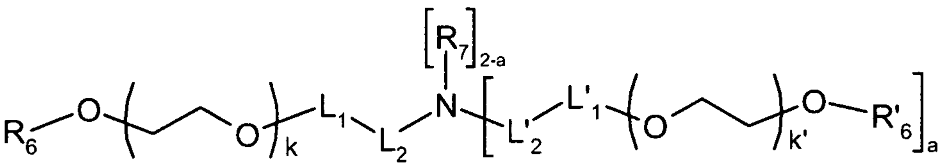

(III-1)

dans laquelle :

- a est égal à 0, 1 ou 2 ;
- $R_7$ représente un atome d'hydrogène ou une chaîne hydrocarbonée, avantageusement choisie parmi les groupes alkyles, cycliques ou non, en $C_1$-$C_{20}$, et de préférence parmi les groupes alkyles en $C_1$-$C_4$, ou parmi les groupes aryles comprenant de 6 à 30 atomes de carbone ; et lorsque a = 0, les groupes $R_7$ peuvent être identiques ou différents et le cas échéant peuvent former entre eux un cycle comprenant de 3 à 5 atomes de carbone ;
- $R_6$ et $R'_6$, identiques ou différents, représentent un atome d'hydrogène ou une chaîne hydrocarbonée, avantageusement choisie parmi les groupes alkyles en $C_1$-$C_{20}$, et de préférence parmi les groupes alkyles en $C_1$-$C_4$, ou parmi les groupes aryles comprenant de 6 à 30 atomes de carbone ;
- k représente un nombre entier supérieur ou égal à 1, de préférence supérieur ou égal à 2, avantageusement compris de 5 à 60, et de préférence de 5 à 40 ;
- k' représente un nombre entier avantageusement compris de 0 à 60, et de préférence de 5 à 40 ;
- $L_1$ et $L'_1$, identiques ou différents, représentent, indépendamment l'un de l'autre, un radical de formule $-[-L'-O-]_t-$, t

représentant un nombre entier compris de 0 à 20, et L' représentant un radical alkylène, linéaire ou ramifié, comprenant de 3 à 10 atomes de carbone, L' représentant de préférence un radical $-CH(CH_3)-CH_2-$ ou $-(CH_2)_4-$, les t groupes L' pouvant être identiques ou différents ;

- $L_2$ et $L'_2$, identiques ou différents, représentent, indépendamment l'un de l'autre, un radical bivalent alkylène, linéaire ou ramifié, comprenant avantageusement de 1 à 20 atomes de carbone, et représentant de préférence un radical $-CH(CH_3)-CH_2-$ ou $-CH_2-CH(CH_3)-$.

Selon un autre mode de réalisation, la composition de l'invention comprend une polyamine de formule (V) suivante :

$$(R_7)_{(2-a)}-(D)_a-N-[L_2-L_1-(O-Z)_k-O-L'_1-L'_2-N(-D)]_g-L_2-L_1-(O-Z)_k-O-L'_1-L'_2-N-(D)_a-(R_7)_{(2-a)} \qquad (V)$$

dans laquelle :

- D représente H ou $R_6-(O-Z)_k-O-L_1-L_2-$ ou $R_7$,
- Z représente un résidu alkylène, éventuellement substitué, comprenant de 2 à 6 atomes de carbone, Z étant de préférence un groupe éthylène,
- g représente un nombre entier compris de 0 à 5, de préférence de 0 à 2,
- a, k, $R_6$, $R_4$, $L_1$, $L_2$, $L'_1$ et $L'_2$ étant tels que définis ci-dessus pour la formule (III-1).

De façon préférée, l'amine de la composition de la présente invention répond à la formule (A) suivante :

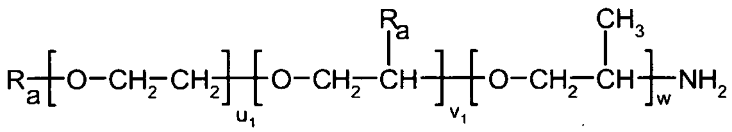

(A)

dans laquelle :

* $u_1$ représente un nombre entier, de préférence supérieur ou égal à 2, avantageusement compris de 5 à 60, et de préférence de 5 à 40
* $v_1$ représente un nombre entier compris de 0 à 30, de préférence de 0 à 10,
* w représente un nombre entier compris de 1 à 30, de préférence de 1 à 10,
* $R_a$ représente un groupe alkyle comprenant de 1 à 20 atomes de carbone, notamment un groupe méthyle ou un groupe alkyle comprenant de 12 à 14 atomes de carbone, tous les groupes $R_a$ pouvant être identiques ou différents.

Les amines préférées dans le cadre de la présente invention sont les suivantes :

- une amine de formule (A) dans laquelle $v_1$ est différent de 0, $R_a$ représente un radical alkyle en $C_{12}$-$C_{14}$ avec un ratio oxyde d'éthylène / oxyde de propylène ($u_1$/w) égal à 9/2 (cette amine est nommée Jeffamine® XTJ 247 et a un poids moléculaire d'environ 700) ; ou
- une amine de formule (A) dans laquelle $v_1$ est différent de 0, $R_a$ représente un groupe méthyle avec un ratio oxyde d'éthylène / oxyde de propylène ($u_1$/w) égal à 12/2 (cette amine est nommée Jeffamine® XTJ 581 et a un poids moléculaire d'environ 730).

De façon particulièrement avantageuse, la composition selon l'invention contient un mélange de composés répondant aux formules (I-1) et (II-1) suivantes :

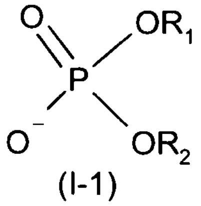

(I-1)

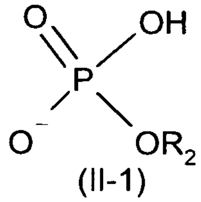

(II-1)

$R_1$ et $R_2$ étant tels que définis ci-dessus pour les formules (I) et (II).

Une composition préférée selon la présente invention comprend de 3% à 30% en poids de tensioactif et de 70% à 97% en poids de (poly)isocyanate.

Ces valeurs permettent d'avoir une émulsion adaptée aux diverses applications envisagées.

Selon un autre mode de réalisation avantageux, la composition selon la présente invention comprend de 5% à 25%, et de préférence de 8 à 20%, en poids de tensioactif.

Cette gamme préférée de tensioactif permet d'améliorer encore les propriétés des films obtenus à partir des compositions polyisocyanates hydrophiles de l'invention.

La présente invention concerne également une composition telle que définie ci-dessus, dans laquelle la quantité utilisée d'amine correspond à la neutralisation complète de la première acidité du mélange de composés.

De préférence, on cherche à obtenir un taux de neutralisation satisfaisant qui correspond à la neutralisation complète de la première acidité du mélange de composés (I) et (II). Ceci permet d'améliorer encore les propriétés des films obtenus à partir des compositions polyisocyanates hydrophiles de l'invention.

Ainsi, on préfère utiliser une mole d'amine pour une mole de fonctions acides (correspondant à la première acidité portée par les monoesters, les diesters et l'acide phosphorique).

Dans le cas où la première acidité n'est pas complètement neutralisée, on peut rencontrer des problèmes de stabilité en ce qui concerne l'isocyanate. Il peut y avoir des réactions secondaires entre les groupements NCO et les groupements OH correspondant à la première acidité libre du monoester ou de l'acide phosphorique, ce qui entraînera une baisse de la teneur en NCO de la composition et une évolution de la viscosité. On préfère généralement une neutralisation au moins supérieure à 50% à hauteur de la première acidité, de préférence supérieure à 90% à hauteur de la première acidité et encore plus préférentiellement, supérieure à hauteur de 110% de la première acidité pour éviter ces problèmes.

Afin de déterminer les taux de monoester, diester et $H_3PO_4$ à partir de l'évaluation des indices d'acides, on décrit ci-après la procédure mise en oeuvre pour le dosage des esters phosphates par une solution d'hydroxyde de potassium ou de sodium.

On entend par indice d'acide le nombre de milligrammes d'hydroxyde de potassium nécessaire pour neutraliser 1g de produit. Cet indice est rendu obligatoirement par convention en mg de KOH quelque soit le titrant utilisé. La procédure pour mesurer cet indice est décrite ci-après.

Selon un mode de réalisation préféré, le (poly)isocyanate de la composition telle que définie ci-dessus est un (poly)isocyanate choisi parmi les produits d'homo- ou d'hétéro-condensation d'alcoylène-di-isocyanate, comprenant notamment des produits du type "biuret" et du type "trimères", voire "prépolymères" à fonction isocyanate, comportant notamment des fonctions urée, uréthane, allophanate, ester, amide, acylurée, isocyanurate, oxadiazinetrione, immino-dimère, immino-trimère (imminotriazinedione), immino-oxadiazinedione (encore appelé trimère asymétrique), diazétidinedione (encore appelé dimère), et parmi les mélanges en contenant.

Les composés polyisocyanates peuvent également comporter des fonctions carbamates vraies (R-O-C(=O)-$NH_2$) ou des fonctions époxy ou des fonctions carbonates de préférence cycliques.

Il peut s'agir, par exemple, des polyisocyanates commercialisés par la Société Rhodia sous la dénomination "Tolonate®".

Les polyisocyanates qui sont utilisés pour la préparation des compositions polyisocyanates hydrodispersibles ont des titres NCO compris en général entre 5 et 25%.

Des monoisocyanates particuliers peuvent être utilisés pour la préparation des compositions polyisocyanates hydrodispersibles afin de moduler certaines propriétés. A titre d'exemple de tels monoisocyanates on peut citer les isocyanato propyl trialkoxysilane.

D'autres polyisocyanates de fonctionnalité NCO supérieure à 2 peuvent aussi être utilisés pour la préparation des compositions polyisocyanates hydrophiles. On peut ainsi citer l'isocyanatoéthyl du diisocyanate de lysine qui permet de diminuer la viscosité des compositions polyisocyanates finales.

Il est aussi possible d'utiliser des (poly)isocyanates tels que définis ci-dessus et qui sont en outre rendus hydrophiles par greffage d'un additif d'hydrophilisation convenable.

De manière générale, les (poly)isocyanates préférés sont les (poly)isocyanates susceptibles d'être obtenus, et généralement obtenus par homo- ou hétéro-condensation de monomères isocyanates aliphatiques, (cyclo- ou aryl-) aliphatiques, choisis dans le groupe constitué des monomères suivants :

- 1,6-hexaméthylène di-isocyanate,
- 1,12-dodécane di-isocyanate,
- cyclobutane-1,3-di-isocyanate,
- cyclohexane-1,3 et/ou 1,4-di-isocyanate,
- 1-isocyanato-3,3,5-triméthyl-5-diisocyanatométhylcyclohexane (isophorone di-isocyanate, IPDI),
- les isocyanatométhyloctylènedi-isocyanate (TTI),

- 2,4 et/ou 2,6-hexahydrotoluylène di-isocyanate ($H_6TDI$),
- hexahydro-1,3 et/ou 1,4-phénylène di-isocyanate,
- perhydro 2,4' et/ou 4,4'-diphénylméthane di-isocyanate ($H_{12}MDI$), et en général les précurseurs aromatiques aminés ou les carbamates perhydrogénés,
- les bis-isocyanatométhylcyclohexane (notamment 1,3 et 1,4) (BIC),
- les bis-isocyanatométhylnorbornane (NBDI),
- 2-méthylpentaméthylène di-isocyanate (MPDI),
- les tétraméthylxylilène di-isocyanate (TMXDI),
- le lysine di-isocyanate ainsi que les esters de la lysine di- ou tri-isocyanate (LDI ou LTI),
- le 2,4- et/ou le 2,6-toluylène di-isocyanate,
- le diphénylméthane-2,4' et/ou 4,4'-di-isocyanate (MDI),
- le 1,3- et/ou le 1,4-phénylène di-isocyanate,
- le triphénylméthane-4,4',4"-triisocyanate, et
- les oligomères du MDI ou du TDI.

Les produits d'homo-condensation sont les produits issus de la condensation d'un des monomères isocyanates, listés ci-dessus, avec lui-même. Les produits d'hétéro-condensation sont les produits issus de la condensation de deux ou plusieurs des monomères listés ci-dessus, entre eux et/ou éventuellement avec un ou plusieurs composés à hydrogène mobile, tels que par exemple un alcool, un diol et autres composés analogues.

Les polyisocyanates compris dans la composition de la présente invention peuvent également être des dérivés polyisocyanates issus d'isocyanates aromatiques utilisés seuls ou en mélange avec des composés aliphatiques.

Toutefois l'utilisation de ces dérivés aromatiques est limitée en quantité voire n'est pas préférée car elle conduit généralement à des revêtements qui peuvent subir une coloration, en général un jaunissement, au cours du vieillissement, notamment si les revêtements sont fortement exposés aux rayonnements ultra violet, par exemple le rayonnement ultra violet solaire.

À titre d'exemples d'isocyanates aromatiques, on peut citer de manière non limitative :

le 2,4- et/ou le 2,6-toluylène di-isocyanate,
le diphénylméthane-2,4' et/ou 4,4'-di-isocyanate (MDI),
le 1,3- et/ou le 1,4-phénylène di-isocyanate,
le triphénylméthane-4,4',4"-triisocyanate, et
les oligomères du MDI, ou TDI.

Des mélanges de ces polyisocyanates (cyclo)aliphatiques et/ou aromatiques peuvent aussi être utilisés.

La viscosité des composés polyisocyanates non masqués utiles à l'invention est située dans une plage de viscosité très large de par la structure des composés polyisocyanates qui peuvent être mis en jeu. La viscosité est généralement supérieure à 10 mPa.s, à 25°C à 100% d'extrait sec, de préférence supérieure à 100 mPa.s, à 25°C et à 100% d'extrait sec.

On peut citer à titre d'exemple la viscosité de produits de la société Rhodia, tels que le Tolonate® HDT-LV2 qui présente une viscosité de l'ordre de 600 mPa.s ± 150 mPa.s, à 25°C, ou encore le Tolonate® HDT de viscosité de 2 400 mPa.s ± 400 mPa.s, à 25°C, ou encore le Tolonate® HDB de viscosité de 9 000 mPa.s ± 2000 mPa.s, à 25°C, ou encore le Tolonate® HDT HR de viscosité d'environ 20 000 mPa.s, à 25°C à 100% d'extrait sec, ou 2 000 mPa.s à 25°C à 90% d'extrait sec dans l'acétate de n-butyle.

Certains composés polyisocyanates sont des solides à 100% d'extrait sec. C'est par exemple le cas du trimère isocyanurate de l'IPDI ou du dimère de l'IPDI. À titre d'exemple on peut donner les viscosités de certains de ces composés en solution organique ; ainsi le Tolonate® IDT 70 S (trimère isocyanurate de l'IPDI) présente une viscosité de l'ordre de 1 700 mPa.s ± 600 mPa.s à 25°C pour une formulation à 70 % d'extrait sec dans le Solvesso® 100, le Tolonate® IDT 70 B (trimère isocyanurate de l'IPDI) présente une viscosité de l'ordre de 600 mPa.s ± 300 mPa.s à 25°C pour une formulation à 70 % d'extr ait sec dans l'acétate de n butyle.

Compte tenu de leur aptitude à conférer aux revêtements une résistance élevée au gravillonnage, sont préférés les produits d'homo-condensation et/ou d'hétéro-condensation à partir d'un monomère isocyanate aliphatique, en particulier non cyclique, de préférence le HDI.

La présente invention concerne également une composition telle que définie ci-dessus, dans laquelle le (poly) isocyanate est un (poly)isocyanate présentant une fonctionnalité moyenne en fonctions isocyanates au moins égale à 2 et au plus égale à 20, de préférence comprise de 2,2 à 10, et avantageusement comprise de 3 à 6.

On a observé que lorsque la fonctionnalité moyenne en fonctions isocyanate du (poly)isocyanate augmente, alors la résistance au gravillonnage et la dureté du revêtement sont améliorées, ce phénomène est particulièrement marqué lors des opérations de retouche.

Dans le cadre de la présente invention, la fonctionnalité moyenne en fonctions isocyanates f(iNCO) est définie par la formule suivante :

$$f(iNCO) = \frac{Mn \times [iNCO]}{42 \times 100}$$

où : Mn représente la masse moléculaire moyenne en nombre obtenue par perméation de gel et [iNCO] représente la concentration en fonctions isocyanates en grammes pour 100 grammes.

Les (poly)isocyanates présents dans la composition selon l'invention peuvent se présenter sous forme masquée, c'est-à-dire que les fonctions isocyanates ne sont pas libres, mais masquées à l'aide d'un agent masquant ou d'un mélange d'agents masquants, tels qu'ils sont définis ci-après. On préfère notamment l'utilisation de compositions de (poly)isocyanates masqués pour l'élaboration d'une formulation de revêtement de type mono-composant (formulation 1 K).

Dans le présent exposé, on entend par (poly)isocyanate masqué un (poly)isocyanate pour lequel au moins 50%, de préférence 80%, avantageusement 90% et plus préférentiellement encore toutes les fonctions isocyanates sont masquées.

L'agent masquant ou le mélange d'agents masquants qui protège temporairement, voire définitivement, les fonctions isocyanates sont des composés qui présentent au moins une fonction portant un hydrogène labile, généralement une fonction portant un hydrogène labile, de préférence une seule fonction portant un hydrogène labile et qui sont réactifs vis-à-vis de la fonction isocyanate. À cette fonction portant un hydrogène labile, peut être associée une valeur de $pK_a$ qui correspond soit à l'ionisation d'un acide [y compris l'hydrogène des fonctions -ols (dans la présente description on entend par "-ol(s)" les phénols et les alcools)], soit à l'acide associé d'une base (en général azotée).

Plus précisément pour optimiser les résultats de la présente invention, ledit $pK_a$ (ou l'un d'entre eux si l'on peut en définir plusieurs) de la fonction portant un ou des hydrogènes labiles est au moins égal à 4, avantageusement 5, de préférence 6 et est au plus égal à 14, avantageusement 13, de préférence 12, et de manière encore préférée 10. Une exception doit cependant être faite pour les lactames, dont le $pK_a$ est supérieur à ces valeurs et qui constituent des agents masquants possibles bien que non préférés pour l'invention.

Un agent masquant est dit temporaire quand la fonction isocyanate est protégée temporairement par l'agent masquant et ne réagit pas dans les conditions de stockage du système formulé avec les fonctions hydroxyles du composé à hydrogène mobile notamment le polyol, mais est ensuite libéré au cours de la réaction de réticulation thermique au four.

La fonction isocyanate libérée réagit alors avec les fonctions à hydrogène mobile ou réactif du polyol pour donner une liaison uréthane et conduire au réseau polyuréthane qui constitue une partie du revêtement. L'agent masquant temporaire est soit éliminé comme composé organique volatil avec la plupart des solvants de formulation, soit reste dans le film, soit réagit avec la résine aminoplast, lorsque la formulation en contient.

À titre d'exemples non limitatifs d'agents masquants temporaires selon l'invention, on peut citer les dérivés de l'hydroxylamine tels que l'hydroxysuccinimide et les oximes comme la méthyléthylcétoxime, les dérivés de l'hydrazine tels que les pyrazoles, les dérivés des triazoles, les dérivés des imidazoles, les dérivés des phénols ou assimilés, les dérivés des amides tels les imides et les lactames, les amines encombrées telles que la N-isopropyl-N-benzylamine, ainsi que les malonates ou cétoesters et les hydroxamates. Ces composés peuvent éventuellement comporter des substituants notamment des chaînes alkyles ou alcoyles.

Pour la détermination des valeurs de $pK_a$ définies plus haut, on pourra se reporter à "The determination of ionization constants, a laboratory manual", A. Albert of E.P. Serjeant ; Chapman and Hall Ltd, London".

Pour la liste des agents masquants, on pourra se reporter à Z. Wicks (Prog. Org. Chem., 1975, 3, 73 et Prog. Org. Chem., 1989, 9,7) et Petersen (Justus Liebigs, Annalen der Chemie 562, 205, (1949).

On préfère comme agents masquants temporaires la méthyléthylcétoxime encore appelée MEKO, le 3,5-dimétyhylpyrazole encore appelé DMP, les 2 ou 4 alkylimidazoles, les malonates de dialkyles, les β-céto-esters cycliques, les amines, les amines encombrées et le caprolactame.

La présente invention ne se limite pas aux seuls agents masquants temporaires, mais peut aussi mettre en jeu des agents masquants dits définitifs. Ceux-ci se caractérisent par le fait que les fonctions isocyanates sont protégées par l'agent masquant et ne réagissent pas avec les fonctions hydroxyles du composé à hydrogène mobile notamment le polyol, dans les conditions de stockage du système formulé, ni au cours de la réaction de réticulation thermique au four.

Les fonctions isocyanates ne sont donc pas restaurées au moment de la réaction de réticulation par cuisson au four et restent masquées, lesdites fonctions masquées pouvant alors réagir dans les conditions de réticulation au four avec les fonctions méthyloles ($-N-CH_2-OH$) ou alkoxyalkyle ($-N-CH_2-O-$alkyle) des résines aminoplastiques (mélamines, benzoguanamine...), en présence d'un catalyseur acide de préférence sulfonique ou d'un précurseur latent de ce catalyseur qui peut être un sel d'amine tertiaire d'un acide sulfonique.

Dans certains cas, le tensioactif présent dans la composition de revêtement selon l'invention peut jouer le rôle

de catalyseur, notamment lorsque le tensioactif est de type anionique et comporte un atome de phosphore.

Les agents masquants utilisés pour protéger définitivement la fonction isocyanate sont en général des composés à fonctions hydroxyle ou sulfhydrile, de préférence monofonctionnels, tels que les hydroxy(cyclo)alkanes, par exemple le méthanol, les butanols, le cyclohexanol, le 2-éthylhexanol ou des composés à fonctions acides carboxyliques, tels que l'acide propionique, l'acide pivalique, l'acide benzoïque. Ces composés peuvent éventuellement porter un ou plusieurs substituants.

Ces agents masquants dits « définitifs » peuvent également être des fonctions isocyanates masquées par des composés comportant au moins une fonction réticulable capable de polymériser par rayonnement UV. À titre d'exemple, on peut citer, comme agents masquants « définitifs », les hydroxy-alcoyl-acrylates ou -méthacrylates.

On peut aussi dans certains cas utiliser, en quantité généralement limitée, des agents masquants bi- ou polyfonctionnels temporaires, comportant des fonctions capables de donner des fonctions isocyanates masquées temporaires et/ou définitives. Toutefois, ceci n'est pas préféré car les composés polyisocyanates masqués présentent rapidement des viscosités élevées, et ce, d'autant plus que la fonctionnalité en fonctions isocyanates (NCO) est plus élevée.

De façon avantageuse, la composition selon l'invention peut contenir en outre un solvant, la quantité de solvant par rapport à la quantité du mélange formé par le système tensioactif et le (poly)isocyanate étant inférieure à 50% en poids, et de préférence inférieure à 40% en poids, le solvant étant choisi dans le groupe constitué des esters, des éthers, des acétals, des carbonates cycliques ou linéaires, des lactones, des éthers de glycol ou de propylène glycol et des N-alkyl-amides.

Le solvant est utilisé dans ce mode de réalisation afin de diminuer la viscosité des polyisocyanates de départ.

Cette teneur en solvant est notamment nécessaire pour mettre en oeuvre des composés comme l'IPDT qui sont solides à température ambiante et qui sont utilisés sous forme de formulations.

La teneur en solvant est minimalisée afin de ne pas avoir des compositions trop riches en COV (Composés organiques volatiles).

La présente invention concerne également une composition, réticulable par traitement thermique, telle que définie ci-dessus, comprenant en outre au moins un composé porteur d'au moins une fonction à hydrogène mobile choisie parmi les fonctions hydroxyles primaires ou secondaires, phénols, amines primaires, et/ou secondaires, carboxyliques et fonction SH, et le cas échéant au moins un solvant organique.

De façon préférée, la composition telle que définie ci-dessus comprend :

- de 10% à 60% en poids de (poly)isocyanate, par rapport au poids total de la composition sans solvant, (% sur sec) ;
- de 0,25% à 12% en poids de tensioactif, par rapport au poids total de la composition sans solvant (% sur sec) ;
- de 30% à 80% en poids de composé porteur d'au moins une fonction à hydrogène mobile, par rapport au poids total de la composition sans solvant (% sur sec) ; et
- de 0% à 30% en poids de solvant organique, par rapport au poids total de la composition.

Avantageusement, la composition telle que définie ci-dessus peut comprendre en outre au moins une résine aminoplastique (résine "aminoplast") de type mélamine-aldéhyde, en particulier mélamine-formaldéhyde, et/ou urée-aldéhyde, en particulier urée-formaldéhyde, ou benzoguanamine et/ou leurs dérivés alkoxyalkyles.

Selon un mode de réalisation préféré, dans la composition telle que définie ci-dessus, la quantité de résine(s) aminoplast est comprise de 15% à 25% en poids par rapport au poids total de la composition sans solvant (% sur sec).

La composition selon la présente invention comprend également une résine de type aminoplastique ou aminoplast de type mélamine formol et/ou urée formol et/ou benzoguanamine formol. Ces polymères sont connus et des détails relatifs à leurs synthèses sont proposés dans les ouvrages cités précédemment, notamment dans le livre de Stoye et Freitag en page 102, chapitre 6.2.

Ces résines aminoplast réagissent notamment à une température comprise entre 100 et 180°C avec les fonctions uréthanes du réseau polyuréthane préalablement créées ou formées au cours de la réaction de réticulation au four par la réaction des fonctions isocyanates libérées avec les fonctions hydroxyles du polyol, ou avec les fonctions carbamates vraies (R-O-C(=O)-$NH_2$) portées éventuellement par les polyols ou les polyisocyanates.

La réaction de réticulation de ces mélamines avec les fonctions uréthanes ou carbamates vraies (R-O-C(=O)-$NH_2$) est une réaction connue qui est généralement catalysée par un acide fort tel que l'acide para-toluènesulfonique ou l'acide naphtalène-sulfonique, ou encore une forme latente de ces catalyseurs acides à savoir les sels d'amine tertiaire de ces acides forts. On pourra se reporter aux livres cités précédemment pour avoir des informations plus complètes sur ces résines aminoplast et leurs synthèses.

La présence d'une ou plusieurs résines aminoplast dans la composition de revêtement selon la présente invention est particulièrement avantageuse pour la formation de la couche de base (ou "base coat"), et n'est en général pas nécessaire pour la formation de la couche de finition (ou "top coat"), bien que ceci ne soit pas exclu du champ de l'invention.

La présente invention concerne également une composition telle que définie ci-dessus, dans laquelle le composé porteur d'au moins une fonction à hydrogène mobile est un polymère contenant au moins deux fonctions hydroxyles (alcool ou phénol) et/ou fonctions thiols et/ou des fonctions amines primaires ou secondaires et/ou contenant des fonctions acides carboxyliques et/ou contenant des fonctions précurseurs, de type époxy ou carbonates qui, par réaction avec un nucléophile adéquat, libèrent les fonctions hydroxyles.

De préférence les composés sont choisis parmi les polyols qui peuvent être utilisés seuls ou en mélange.

On peut à titre d'exemples de tels composés citer les polyols ou les polyuréthanes en dispersion ou les polyamines ou les polythiols ou les polyacides ou encore les polymères à base de polycaprolactone. Ces polymères peuvent contenir éventuellement une multiplicité de fonctions à hydrogènes mobiles. Des mélanges de tels polymères peuvent aussi être utilisés. D'une manière générale on préfère les polyols choisis parmi les polyesters, les polyacrylates, les polycaprolactones ou les polyéthers ou leurs mélanges.

Pour les revêtements exposés aux conditions extérieures, les polyesters ou les polyols acryliques ou les polyols carbonate ou les polyuréthanes polyols seront avantageusement retenus.

Les compositions polyols sous dénomination latex peuvent aussi être utilisées. Ces composés sont en général obtenus par polymérisation radicalaire des composés à fonctions alcényles tels qu'acrylates, méthacrylates, styrényles...

De façon encore préférée, la composition telle que définie ci-dessus est caractérisée en ce que le composé porteur d'au moins une fonction à hydrogène mobile est un polyol choisi parmi les polymères acryliques ou polyesters ou polyuréthanes.

Pour des raisons de flexibilité des revêtements et particulièrement pour la couche dite « primaire », on préfère utiliser des polyols polyesters ou des polyesters uréthanes. En général, on utilise un mélange de deux résines polyesters ou polyesters uréthanes, l'une se caractérisant par un caractère « dur » et l'autre par un caractère « mou » ou « souple ». Le caractère dur ou souple des polyesters est conféré par la nature des monomères utilisés au cours de leur synthèse.

Ainsi un polyester « dur » sera obtenu en choisissant des monomères acides ou alcools aromatiques et/ou cycloaliphatiques et/ou fortement ramifiés. À titre d'exemples de ce type de monomères, on peut citer l'anhydride phtalique, ou le cyclohexane-diol ou le 2,2,4-triméthylpentanediol.

Un polyester « souple » est obtenu en choisissant des monomères aliphatiques linéaires peu ramifiés, tels que l'acide adipique ou le 1,4-butanediol ou le 1,6-hexanediol, ou bien comportant des hétéroatomes dans leur structure, tels que les di- ou poly-éthylène glycols. Ces derniers ne sont toutefois pas recherchés dans la mesure où ces composés présentent une faiblesse quand à leur stabilité aux rayonnements ultra violet.

Les polyols polyesters sont industriels et leur synthèse est largement décrite et connue de l'homme de l'art. Pour plus de détails on pourra se reporter aux ouvrages suivants : « Matériaux polymères, structure, propriétés et applications » de Gottfried W. Ehrenstein et Fabienne Montagne édité en 2000 chez Hermès Science ; « Handbook of Polyuréthanes » de Michael Szycher, édité en 1999 chez CRC press ; « Resins for coatings, Chemistry, Properties and Applications » de D. Stoye and W. Freitag, édité chez Hanser en 1996, ainsi que l'article d'Eurocoat 97 préalablement cité. On peut également consulter les catalogues commerciaux des sociétés distributrices de polyols notamment le livre intitulé « Specialty Resins, creating the solution together » de la société AKZO NOBEL RESINS édité en février 2001.

Avantageusement, le polyol tel que défini ci-dessus présente une fonctionnalité en groupes à hydrogènes mobiles au moins égale à 2, en général comprise de 2 à 100, et de préférence de 2 à 30.

Selon un autre mode de réalisation avantageux, le polyol présente une fonctionnalité en OH comprise de 2 à 30, et de préférence de 2 à 10.

En général, pour l'application visée, une fonctionnalité en OH trop élevée conduirait à des composés trop "durs". On préfère donc utiliser des polyols polyesters de fonctionnalité relativement faible inférieure à 15, de préférence inférieure à 10.

La définition de la fonctionnalité moyenne en fonctions hydroxyles par chaîne polymère est par exemple donnée dans l'article de Ben Van Leeuwen « High solids hydroxy acrylics and tightly controled molecular weight » paru dans le recueil de conférences de Eurocoat 1997 (pp 505 - 515) en page 507.

Cette fonctionnalité moyenne F(OH) se calcule à l'aide de l'équation suivante :

$$F(OH) = \frac{\text{Nombre OH} \times \text{Mn}}{56100}$$

dans laquelle :

- F(OH) représente la fonctionnalité moyenne en fonctions hydroxyles ;
- Nombre OH représente le titre en fonctions hydroxyles exprimé en mg de KOH (hydroxyde de potassium) par gramme de polymère ; et
- Mn représente la masse moléculaire moyenne en nombre du polymère, elle-même déterminée par chromatographie de perméation de gel (GPC), par comparaison avec des étalons de polystyrène calibrés.

La présente invention concerne également une composition telle que définie ci-dessus, caractérisée en ce que la masse moléculaire moyenne en nombre du composé porteur d'au moins une fonction à hydrogène mobile est compris de 100 à 100 000.

Selon un mode de réalisation préféré, la composition telle que définie ci-dessus comprend un polyol qui est un polyol polyester de masse moléculaire moyenne en nombre comprise de 500 à 10 000, de préférence de 600 à 4 000.

Dans certains cas on peut aussi utiliser un polyol ou un mélange de polyols polyacryliques qui confèrent une dureté plus élevée au revêtement. Ces polyols peuvent être « durs » ou « souples » selon que l'on utilise des monomères présentant respectivement un caractère aromatique et/ou cycloaliphatique et/ou fortement ramifié pour cette propriété « dure » et des monomères présentant majoritairement un caractère aliphatique pour la propriété « souple ».

La synthèse des polyols acryliques est également connue de l'homme de l'art et on pourra consulter les livres préalablement cités pour avoir plus de détail sur leurs synthèses.

La masse moléculaire moyenne en nombre pour les polyols acryliques est généralement comprise entre 134 et 50 000, de préférence entre 500 et 25 000, avantageusement entre 1 000 et 15 000.

Le titre en fonctions hydroxyles est généralement compris entre 10 et 750 mg de KOH par gramme de polymère, de préférence compris entre 15 et 500 mg de KOH par gramme de polymère.

À titre d'exemple de polyols acryliques, on peut se reporter à l'article d'Eurocoat 97 préalablement cité, en page 515, où sont indiquées les caractéristiques de quelques polyols acryliques, ces exemples n'ayant pas un caractère limitatif.

On peut aussi utiliser des polyols hyperbranchés qui se caractérisent généralement par une fonctionnalité plus élevée que les polyols linéaires, mais ces produits ne sont pas préférés compte tenu de la viscosité élevée de ces produits.

Des polyols structurés ou à blocs peuvent aussi être utilisés si l'on cherche un effet de compartimentation de propriété. Toutefois ces produits, généralement plus coûteux, ne sont utilisés que pour apporter une propriété particulière. Ces composés sont par exemple un agent de rhéologie ou un agent d'aide à la dispersion de pigments.

En règle générale, pour les besoins de la présente invention, le ratio fonctions isocyanates / fonctions à hydrogène mobile est compris entre 1,5 et 0,5, de préférence entre 1,2 et 0,8. En particulier, lorsque le composé à hydrogène mobile est un polyol, le ratio fonctions isocyanate / fonctions hydroxyle est compris entre 1,5 et 0,5, de préférence entre 1,2 et 0,8.

La présente invention concerne également un procédé de préparation d'une composition polyisocyanates hydrophile telle que définie ci-dessus, comprenant une étape de mélange des composés de formules (I) et (II), de l'amine et du (poly)isocyanate.

Il est préférable d'éviter le cas où l'amine, quand elle est primaire ou secondaire, est présente seule avec l'isocyanate car elle peut réagir et donner une urée.

Il est préférable en cas d'utilisation d'amine secondaire ou primaire de procéder à l'étape de neutralisation préalablement à l'ajout avec le polyisocyanate pour éviter les réactions non désirées entre groupes NCO et amine. Dans le cas d'une amine tertiaire, on peut éventuellement procéder au mélange de l'amine avec le polyisocyanate puis effectuer l'étape de neutralisation en rajoutant la partie acide.

La présente invention concerne également un procédé de préparation d'une composition telle que définie ci-dessus, dans laquelle l'amine du tensioactif est une amine primaire ou secondaire, ledit procédé étant caractérisé en ce qu'il comprend une étape de mélange des composés de formules (I) et (II) et de l'amine, suivie d'une étape d'addition du (poly)isocyanate.

La présente invention concerne également un procédé de préparation d'une composition telle que définie ci-dessus, dans laquelle l'amine du tensioactif est une amine tertiaire, ledit procédé étant caractérisé en ce qu'il comprend une étape de mélange des composés de formules (I) et (II) et de l'amine, suivie d'une étape d'addition du (poly)isocyanate, ou en ce qu'il comprend une étape de mélange de l'amine et du (poly)isocyanate, suivie d'une étape d'addition des composés de formules (I) et (II).

Le procédé de préparation de la présente invention est effectué à une température comprise de préférence de 5 à 100°C ava ntageusement à une température comprise de 15 à 60°C et mieux encore d e 20 à 50°C, et ce en travaillant de préférence en atmosphère inerte et en évitant l'introduction d'eau. En général, il est préférable de travailler à température ambiante, mais pour des raisons particulières de formulations de polyisocyanates visqueux, il est possible de travailler à des températures supérieures à la température ambiante.

La présente invention concerne également un procédé de fabrication d'un substrat revêtu, caractérisé en ce qu'il comprend une étape d'application sur un substrat d'une composition réticulable par traitement thermique telle que définie ci-dessus, et une étape de réticulation par traitement thermique de ladite composition.

Selon un mode de réalisation avantageux, le procédé tel que défini ci-dessus est caractérisé en ce que la réticulation par traitement thermique est effectuée à une température comprise de 60°C à 300° C, de préférence supérieure à 80°C et inférieure à 300°C avantageusement de 100°C à 200°C, pendant une durée comprise de quelques secondes à quelques heures.

La composition réticulable susmentionnée peut être utilisée comme première couche (élaboration d'un revêtement pour première monte) ou comme couche secondaire, notamment comme durcisseur de la couche primaire d'un revêtement, ou pour des opérations de retouches.

La présente invention concerne également un substrat revêtu susceptible d'être obtenu par le procédé tel que défini ci-dessus.

Le substrat peut être de tout type, et est généralement un substrat métallique, par exemple aluminium ou acier, en particulier acier inoxydable. Le substrat peut également être un substrat en matériau plastique, c'est-à-dire un matériau polymère thermoplastique ou thermodurcissable, comprenant le cas échéant des charges, par exemple des charges de renfort, comme par exemple des fibres de verre, de carbone, et autres.

Grâce aux propriétés conférées par le revêtement précité, le substrat revêtu peut le cas échéant être plié, formé, embouti. Le substrat ainsi revêtu possède une excellente résistance au gravillonnage, ainsi qu'une excellente résistance aux lavages sous pression, voire haute-pression, notamment dans le cas des substrats en matière plastique.

D'autres composés additifs peuvent être ajoutés aux formulations de revêtements pour notamment faciliter la mise en oeuvre ou pour apporter une fonction de protection ou d'embellissement. A ce titre, on peut citer les anti-mousses, les pigments ou colorants ou additifs conférant une résistance à la rayure ou aux graffitis. Ce genre d'ajout est bien connu de l'homme de l'art ou du formulateur de revêtement qui ajustera les quantités aux propriétés visées par l'application.

Les domaines d'application des nouveaux composés sont les adhésifs, peintures et vernis, les colles, les produits de traitement du textile ou des fibres minérales ou organiques ou organo-minérales, le béton ou façades. Les supports à revêtir concernés sont les bois, les métaux, les textiles, les celluloses diverses, les composés minéraux, les verres.

**Mesure de l'indice d'acide**

La procédure de mesure de l'indice d'acide consiste à neutraliser le produit après mise en solution dans un solvant approprié (eau ou eau + 2,5 % d'Igepal NP-10 ( ou Nonylphénol 10 OE) ou eau/éthanol 50/50) par une solution d'hydroxyde de potassium ou de sodium. Il s'agit d'un titrage par pH-métrie ou potentiométrie.

Le mode opératoire de cette méthode de dosage est le suivant :

1) Préparation de 2 solutions de 100 mL :

On pèse environ 2 g du produit à tester dans un bécher de 250 ml et on complète à environ 100 ml avec une solution d'eau permutée et, si nécessaire, pour une meilleure dissolution, on ajoute 2,5 % d'Igepal NP-10. Enfin, on laisse agiter jusqu'à dissolution complète (agitation magnétique).

2) Premier essai : Dosage des deux premières acidités

Une des solutions d'ester phosphate (préparées dans l'étape précédente) est titrée par de l'hydroxyde de sodium à 0,5 N en agitant énergiquement (agitation magnétique). On obtient deux inflexions correspondant respectivement à la première acidité de l'$H_3PO_4$, du diester et du monoester, et en deuxième lieu à la deuxième acidité de l'$H_3PO_4$ et à la deuxième acidité du monoester.

On note le volume de titrant nécessaire pour atteindre chaque saut :

- $V_1$ pour la première équivalence.
- $V_2$ pour la deuxième équivalence.

3) Deuxième essai : dosage de la troisième acidité

La deuxième solution d'ester phosphate est titrée de manière identique à la précédente mais, juste avant la deuxième inflexion, on ajoute rapidement 10 ml d'une solution de $CaCl_2$ 10% à l'aide d'une seringue, ce qui permet d'observer une diminution du pH :

$$2\ Na_2HPO_4 + CaCl_2 \leftrightarrow (PO_4\ Na_2)_2\ Ca + 2HCl$$

suivi de la troisième inflexion correspondant à la troisième acidité de l'$H_3PO_4$ On note le volume, $V_3$, de titrant nécessaire pour atteindre le troisième saut.

Les indices d'acide sont alors calculés comme suit :

Premier indice d'acide :

$$I_{A1} = \frac{V_1 \times N \times 56,1}{m_1}$$

Deuxième indice d'acide :

$$I_{A2} = \frac{V_2 \times N \times 56,1}{m_1}$$

Troisième indice d'acide :

$$I_{A3} = \frac{V_3 \times N \times 56,1}{m_2}$$

où $V_i$ = volume de solution d'hydroxyde de sodium en ml
N = normalité du titrant
$m_i$ = masse en g d'ester phosphate titré dans la solution i Masse molaire de KOH = 56,1 g

Les pourcentages molaires d'$H_3PO_4$, de monoester et de diester dans la phase ionique sont calculés comme suit :

$$\%H_3PO_4 = \frac{V_3 - V_2}{V_1} \times 100 = \frac{I_{A3} - I_{A2}}{I_{A1}} \times 100$$

$$\%monoester = \frac{(2V_2 - V_1 - V_3)}{V_1} \times 100 = \frac{(2I_{A2} - I_{A1} - I_{A3})}{I_{A1}} \times 100$$

$$\%diester = \frac{(2V_1 - V_2)}{V_1} \times 100 = \frac{(2I_{A1} - I_{A2})}{I_{A1}} \times 100$$

Les pourcentages massiques d'$H_3PO_4$, de monoester et de diester libres sont calculés comme décrit ci-après.
Pour calculer la masse molaire moyenne, on reporte les fractions molaires : n($H_3PO_4$), n(monoester), n(diester) et n(ionique), où :

n($H_3PO_4$) = % $H_3PO_4$ / 100
n(monoester) = % monoester /100
n(diester) = % diester /100
n(ionique) = % ionique /100

Ainsi on calcule la masse molaire moyenne ($MM_{moy}$) comme suit :

$$MM_{moy} = (M(H_3PO_4) \times n(H_3PO_4)) + (M(monoester) \times n(monoester)) + (M(diester) \times n(diester))$$

Les pourcentages massiques sont alors les suivants :

$$\% \text{ ionique} = \frac{V_1 \times N \times MM_{moy}}{10 \times m_1}$$

$$\% \ H_3PO_4 = \frac{M(H_3PO_4)}{MM_{moy}} \times n(H_3PO_4) \times n(\text{ionique}) \times 100$$

$$\% \text{ monoester} = \frac{M(\text{monoester})}{MM_{moy}} \times n(\text{monoester}) \times n(\text{ionique}) \times 100$$

$$\% \text{ diester} = \frac{M(\text{diester})}{MM_{moy}} \times n(\text{diester}) \times n(\text{ionique}) \times 100$$

EXEMPLES

Les produits suivants sont utilisés :

- Bis (2-ethylhexyl) phosphate (B2EHP), n° CAS [298-07-7], 97 % de diester Aldrich

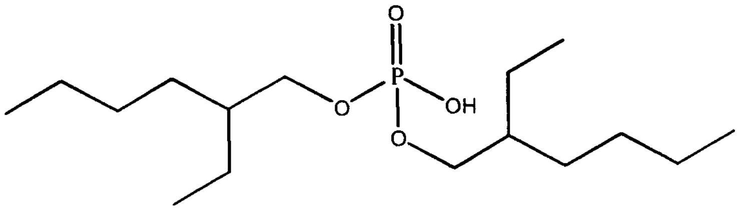

composé de formule (I) où $R_1 = R_2$ = 2-éthylhexyl

- Dibutylphosphate (DBP) n°CAS [107-66-4] Aldrich 97 % diester

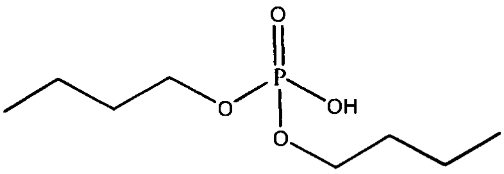

composé de formule (I) où $R_1 = R_2$ = butyl

- **HORDAPHOS MOB,** n°CAS [12788-93-1], société CLARIANT ester de l'acide phosphorique, rapport molaire mono/diester= 7,4
- **HORDAPHOS MDB,** n°CAS [12788-93-1], société CLARIANT ester de l'acide phosphorique, rapport molaire mono/diester= 1,6
- **Rhodafac SS 610** n°CAS [9046-01-9] société RHODIA Ester éthoxylé de l'acide phosphorique, rapport molaire mono/diester = 5,8

| mg KOH/g | Hordaphos MOB | Hordaphos MDB | Rhodafac SS 610 |
|---|---|---|---|
| 1ère acidité | 360 | 312 | 103 |

**DMCHA** : N,N-diméthylcyclohexylamine, n°CAS [98-94-2], société BASF

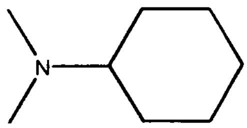

- **NEM** ; N-éthylmorpholine n°CAS [100-74-3] société BASF

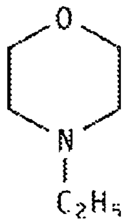

- **EDIPA** Ethyldiisopropylamine n°CAS [7087-68-5] société B ASF

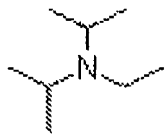

- **Tolonate HDT** (Rhodia) : polyisocyanate sur base Hexaméthylène diisocyanate (HDI) qui se caractérise essentiellement par la présence de cycles isocyanurates et dans une moindre mesure de fonctions biurets et de cycles dimères (diazetidine dione) ; sa teneur en fonctions isocyanates est d'environ 22% ± 0,5% en poids et sa viscosité est comprise entre 2000 et 2800 mPa s à 25°C.
- **Tolonate HDT LV2** (Rhodia) : polyisocyanate sur base Hexaméthylène diisocyanate (HDI) qui se caractérise essentiellement par la présence de cycles isocyanurates et dans une moindre mesure de fonctions biurets et de cycles dimères (diazetidine dione) ; sa teneur en fonctions isocyanates est d'environ 23% ± 1 % en poids et sa viscosité est comprise entre 450 et 750 mPa s à 25°C.
- **SETALUX 6511 AQ- 47** (Nuplex) : polyol acrylique, %OH =4,2%, ES = 47%,
- **SETALUX 6520 AQ- 45** (Nuplex) : polyol acrylique, %OH =3,2%, ES = 45%,
- **Macrynal 6299 WA 42** (Cytec) polyol acrylique (Cytec), 4,1 % OH, ES = 42%

**Préparation des tensioactifs et des polyisocyanate hydrophiles pour utilisation avec des dispersions de Polyuréthanes**

Les esters de phosphate sont neutralisés avec les amines par simple mélange 1 heure sur un roule pot. Les tensioactifs préparés précédemment sont mélangés au roule pot pendant une nuit avec du tolonate HDT ou du tolonate HDT LV2 pour préparer les polyisocyanates hydrophiles.

Le tableau suivant résume les compositions des différents polyisocyanates hydrophiles (le terme phosphate 1 se réfère aux esters de phosphate non éthoxylées) :

| | | Composition massique (%) | | | | | | |
|---|---|---|---|---|---|---|---|---|
| | Type phosphate 1 | HDT | HDT LV2 | DMCHA | NEM | EDIPA | Phosphate 1 | SS 610 |
| Exemple 1 | MOB | 88 | / | 5,6 | / | / | 6,4 | / |
| Exemple 2 | B2EHP | 88 | / | 3,4 | / | / | 8,6 | / |
| Exemple 3 | MDB | 88 | / | 6,2 | / | / | 5,8 | / |
| Exemple 4 | DBP | 88 | / | 4,6 | / | / | 7,4 | / |
| Exemple 5 | DBP | 93 | / | 2,05 | / | / | 2,15 | 2,8 |
| Exemple 6 | DBP | 93 | / | 1,65 | / | / | 0,9 | 4,45 |

(suite)

| | | Composition massique (%) | | | | | | |
|---|---|---|---|---|---|---|---|---|
| | Type phosphate 1 | HDT | HDT LV2 | DMCHA | NEM | EDIPA | Phosphate 1 | SS 610 |
| Exemple 7 | DBP | 90 | / | 2,95 | / | / | 3,05 | 4 |
| Exemple 8 | DBP | 90 | / | 2,4 | / | / | 1,2 | 6,4 |
| Exemple 9 | DBP | 93 | / | 2,45 | / | / | 3,45 | 1,1 |
| Exemple 10 | DBP | 90 | / | 3,5 | / | / | 4,9 | 1,6 |
| Exemple 11 | MDB | 92 | / | 3,5 | / | / | 4,5 | / |
| Exemple 12 | MDB | 92 | / | / | 3,3 | / | 4,7 | / |
| Exemple 13 | MDB | 92 | / | / | / | 3,5 | 4,5 | / |
| Exemple 14 | MDB | / | 92 | 2,6 | / | / | 2,4 | 3,2 |
| Exemple 15 | MDB | / | 92 | / | 2,5 | / | 2,3 | 3,2 |
| Exemple 16 | MDB | / | 92 | / | / | 2,6 | 2,3 | 3,1 |
| Exemple 17 | MDB | 92 | / | 2,6 | / | / | 2,4 | 3,2 |
| Exemple 18 | MDB | 92 | / | / | 2,5 | / | 2,3 | 3,2 |
| Exemple 19 | MDB | 92 | / | / | / | 2,6 | 2,3 | 3,1 |

## Résultats d'application

### 1)Evaluation de la dispersibilité dans l'eau

La mesure des tailles de particules est réalisée à l'aide d'un granulomètre laser type Mastersizer 2000 de chez Malvern. On donne la taille moyenne de particule correspondant à 50% et 90 % de la population en volume.

| Produit exemple n° | ratio molaire Monoester /diester | $d_{50}$($\mu$m) | $d_{90}$($\mu$m) |
|---|---|---|---|
| 5 | 0,4 | 15,5 | 23,9 |
| 6 | 1,2 | 0,1 | 0,4 |
| 7 | 0,4 | 9,8 | 16,8 |
| 8 | 1,2 | 0,1 | 0,1 |
| 9 | 0,1 | 58,3 | 92,8 |
| 10 | 0,1 | 24,7 | 39,3 |
| 18 | 2,1 | 0,097 | 0,097 |
| 19 | 2,1 | 0,114 | 0,114 |

Les produits comportant des ratios monoester/diester inférieurs à 1 présentent des tailles de particules supérieures au micron et ne sont pas facilement autoémulsifiables.

### 2) Préparation d'une formule à base de dispersion de polyuréthane pour vernis parquet

Les polyisocyanates des exemples 1 à 4 sont dilués avec 30% d'acétate de butyle glycol afin d'être prêts à l'emploi. On réalise ensuite une formulation à partir de 10 parts d'une partie A commerciale de chez BONA (ref Flow) et de 1 part des polyisocyanates dilués dans de l'acétate de butylglycol. Le mélange est réalisé à la main dans un bécher de 50 ml.Après 10 min de repos, les compositions sont appliquées sur plaques Leneta et laissées à température et humidité contrôlée (23°C, 50% HR) pendant 7 jours. Ensuite, la brillan ce à 60° est mesurée à l'aide d'un glossmeter (BYK) et l'aspect visuel du film est évalué selon une échelle de 1 à 10.

1 : film sans défaut
10 : film complètement hétérogène présentant des traces de gels ou démouillage.

Le tableau suivant donne les résultats obtenus :

| Exemple | Qualité du mélange | cotation film | Produit de l'exemple |
|---|---|---|---|
| Exemple 20 | RAS | 2 | 1 |
| Exemple 21 | hétérogène | 10 | 2 |
| Exemple 22 | R.A.S | 3 | 3 |
| Exemple 23 | grumeaux | 8 | 4 |

Les exemples 21 et 23, préparés à base de diesters purs, présentent des aspects visuels très dégradés.
Pour les exemples préparés à partir de mélanges de mono et diesters, il est possible d'obtenir des films présentant un aspect visuel satisfaisant (exemples 20 et 22).
Le polyisocyanate hydrophile de l'exemple 1 est mis à nouveau en oeuvre dans les mêmes conditions mais en variant le solvant utilisé pour la dilution du polyisocyanate.
Le tableau ci-dessous donne les résultats de brillance et d'aspect du film.

| Exemple | mélange | 60° | cotation film | Solvant |
|---|---|---|---|---|
| Exemple 24 | RAS | 84 | 2 | Acétate de butylglycol |
| Exemple 25 | RAS | 87 | 3 | ProGlyde DMM (Dow) |
| Exemple 26 | RAS | 85 | 3 | Rhodiasolv RPDE (Rhodia) |

Les résultats sont comparables pour les trois solvants et indiquent que la formulation est robuste aux changements de nature des solvants.

**3) Préparation d'une formule à base de polyol acrylique pour application métal :**

Le polyol utilisé est un polyol de type acrylique (Macrynal 6299 de Cytec) titrant 4,1% OH .La partie A est préparée en mélangeant les ingrédients suivants dans l'ordre :

| | Quantité (g) | Fonction | Fournisseur |
|---|---|---|---|
| Macrynal VSM 6299W/42WA | 83,75 | polyol | Cytec |
| Borchi gel LW44 (50% ds H2O) | 0,5 | épaississant | Borchers |
| Butoxyl | 4,8 | solvant | Celanese |
| Proglyde DMM | 0,95 | solvant | Dow |
| BYK346 | 0,95 | agent mouillant | Byk |
| Borch GOL LAC 80 (10% dans butoxyl) | 1,45 | agent d'étalement | Borcher |
| $H_2O$ | 7,6 | | |

La formulation finale est réalisée en mélangeant la partie A avec les polyisocyanates des exemples 1 et 3 selon les conditions suivantes :

| | Exemple 27 | Exemple 28 |
|---|---|---|
| Partie A (g) | 80,02 | 80,22 |
| Polyisocyanate de l'exemple 1 | 30,84 | / |
| Polyisocyanate de l'exemple 3 | / | 30,62 |

(suite)

| | Exemple 27 | Exemple 28 |
|---|---|---|
| Butoxyl (g) | 7,75 | 7,74 |
| Ajout eau (g) | 31,13 | 30,71 |
| | | |
| Viscosité coupe DIN 4 | 25"17 | 23"59 |

Les formulations sont ensuite appliquées à l'aide d'un tire film sur plaque de verre et la mesure de brillance est effectuée après 7 jours de stockage en atmosphère contrôlée (23°C et 50 % humidité relative).

| test | Exemple 27 | Exemple 28 |
|---|---|---|
| | | |
| Epaisseur | 61 µm | 64 µm |
| Brillance 20° | 89 | 84 |
| Haze | 26 | 65 |

L'utilisation des produits objets de l'invention dans cette formule permet d'obtenir des revêtements de bonne qualité optique avec de faible valeurs de haze, signe d'une compatibilité améliorée.

**4) Préparation d'une formule de vernis acrylique pour application plastique**

On prépare dans un premier temps un mélange d'additifs selon la composition suivante

(Dispermat à 2000tr/mn)

| produit | % poids | fonction | fournisseur |
|---|---|---|---|
| Butyle glycol | 44 | Co solvant | |
| Dehydran 1293 | 20,6 | Antimousse | Cognis |
| BYK 301 | 13,1 | Agent de tension | BYK Chemie |
| BYK 348 | 22,3 | Agent de mouillage | BYK Chemie |

Préparation de la partie A sur Dispermat à 2000tr/mn

Chaque ingrédient selon la composition suivante est ajouté progressivement. Puis le tout est agité à 3000tr/mn durant 20mn.

| produit | Poids (g) | Nature | fournisseur |
|---|---|---|---|
| Setalux 6511 AQ47 | 509 | Polyol acrylic | Nuplex |
| Setalux 6520 AQ45 | 176 | Polyol acrylic | Nuplex |
| H2O (déminéralisée) | 80 | | |
| DMEA (dimethyl éthanol amine) | 3,8 | Agent de neutralisation | |
| Mélange d'additif | 24,2 | | |
| BGA (butyle glycol acétate) | 70 | Co solvant | |
| H2O (déminéralisée) | 137 | | |

Dans un bêcher de 250ml, sont ajouté dans la « *partie A* », la quantité de polyisocyanate nécessaire pour avoir un taux de NCO /OH de 1,4 et, éventuellement un solvant de dilution pour le polyisocyanate.

| Réf exemple | Produit de l'exemple | Partie A (g) | Partie B (g) | Butoxyl (g) |
|---|---|---|---|---|
| 29 | 5 | 100 | 21,3 | / |
| 30 | 6 | 100 | 21,3 | / |
| 31 | 7 | 100 | 21,8 | / |
| 32 | 8 | 100 | 21,8 | / |
| 33 | 9 | 100 | 21,3 | / |
| 34 | 10 | 100 | 21,8 | / |
| 35 | 11 | 100 | 21,4 | 5,4 |
| 36 | 12 | 100 | 21,4 | 5,4 |
| 37 | 13 | 100 | 21,4 | 5,4 |
| 38 | 14 | 100 | 20,4 | 5,1 |
| 39 | 15 | 100 | 20,4 | 5,1 |
| 40 | 16 | 100 | 20,4 | 5,1 |
| 41 | 17 | 100 | 21,4 | / |
| 42 | 18 | 100 | 21,4 | / |
| 43 | 19 | 100 | 21,4 | / |

12 g d'eau déminéralisée sont rajoutés avant application pour diminuer la viscosité

Le tout est mélangé durant 60 secondes avec un viscosimètre (model 33271 ERICHSEN).

Après 10mn de repos, le mélange est appliqué avec le tire film automatique ERICHSEN (model 509/3) à la vitesse de 18mm/s sur deux plaques de verre pour une épaisseur humide de 200μm.

Les plaques sont désolvantées pendant 15mn à température ambiante puis cuites au four durant 30mn à 80°C.

Après cuisson, les plaques sont conservées en atmosphère conditionnée (23°C, 50% humidité) Ensuite, la brillance à 20° es t mesurée à l'aide d'un glossmeter (BYK). Les valeurs de brillance et de Haze (traduisant la qualité optique du film) sont données dans le tableau suivant :

| Ref exemple | Produit exemple n° | ratio molaire Monoester /diester | gloss 20° | haze |
|---|---|---|---|---|
| 27 | 5 | 0,4 | 67 | 305 |
| 28 | 6 | 1,2 | 94 | 29 |
| 29 | 7 | 0,4 | 65 | 346 |
| 30 | 8 | 1,2 | 93 | 57 |
| 31 | 9 | 0,1 | 56 | 352 |
| 32 | 10 | 0,1 | 64 | 324 |
| 33 | 11 | 1,6 | 92 | 90 |
| 34 | 12 | 1,6 | 89 | 126 |
| 35 | 13 | 1,6 | 96 | 57 |
| 36 | 14 | 2,1 | 96 | 38 |
| 37 | 15 | 2,1 | 98 | 20 |
| 38 | 16 | 2,1 | 97 | 27 |
| 39 | 17 | 2,1 | 96 | 22 |

(suite)

| Ref exemple | Produit exemple n° | ratio molaire Monoester /diester | gloss 20° | haze |
|---|---|---|---|---|
| 40 | 18 | 2,1 | 93 | 48 |
| 41 | 19 | 2,1 | 99 | 22 |

Les compositions présentant un ratio monoester/diester inférieur à 1 sont caractérisées par des valeurs de brillant plus faible et des valeurs de haze plus importantes.

## Revendications

**1.** Composition comprenant :

- au moins un (poly)isocyanate et
- au moins un tensioactif comprenant une amine et un mélange de composés répondant aux formules (I-1) et (II-1) suivantes :

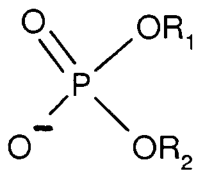

(I-1)

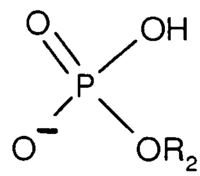

(II-1)

dans lesquelles :

- $R_1$ et $R_2$, identiques ou différents, représentent, indépendamment l'un de l'autre, une chaîne hydrocarbonée, avantageusement choisie parmi les groupes aryles en $C_6$-$C_{30}$ et les groupes alkyles en $C_1$-$C_{20}$, éventuellement substitués, avantageusement groupes alkyles en $C_4$-$C_{10}$ éventuellement substitués ;

ledit mélange de composés de formule (I-1) et (II-1) étant **caractérisé en ce que** le ratio molaire entre le composé (II-1) et le composé (I-1) est supérieur à 1, et est de préférence compris de 1 à 10, et avantageusement de 2 à 6.

**2.** Composition selon la revendication 1, **caractérisée en ce que** l'amine est une amine de formule (III) suivante :

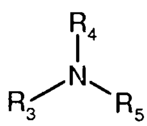

(III)

dans laquelle $R_3$, $R_4$ et $R_5$ représentent, indépendamment l'un de l'autre, H ou une chaîne hydrocarbonée, avantageusement choisie parmi les groupes aryles en $C_6$-$C_{30}$ et les groupes alkyles en $C_1$-$C_{20}$, éventuellement substitués, les groupes $R_3$, $R_4$ et $R_5$ pouvant le cas échéant comprendre au moins un groupement oxyde d'alkylène, et de préférence au moins un groupe oxyde d'éthylène.

**3.** Composition selon l'une quelconque des revendications 1 ou 2, **caractérisée en ce que** l'amine répond à la formule (III-1) suivante :

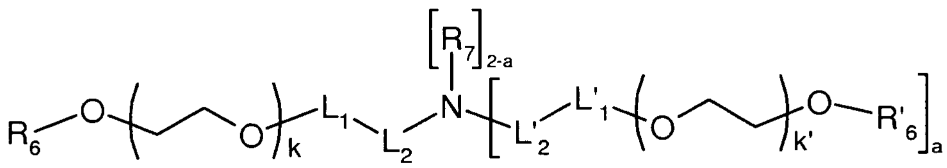

(III-1)

dans laquelle :

- a est égal à 0, 1 ou 2 ;
- $R_7$ représente un atome d'hydrogène ou une chaîne hydrocarbonée, avantageusement choisie parmi les groupes alkyles, cycliques ou non, en $C_1$-$C_{20}$, et de préférence parmi les groupes alkyles en $C_1$-$C_4$, ou parmi les groupes aryles comprenant de 6 à 30 atomes de carbone ; et lorsque a = 0, les groupes $R_7$ peuvent être identiques ou différents et le cas échéant peuvent former entre eux un cycle comprenant de 3 à 5 atomes de carbone ;
- $R_6$ et $R'_6$, identiques ou différents, représentent un atome d'hydrogène ou une chaîne hydrocarbonée, avantageusement choisie parmi les groupes alkyles en $C_1$-$C_{20}$, et de préférence parmi les groupes alkyles en $C_1$-$C_4$, ou parmi les groupes aryles comprenant de 6 à 30 atomes de carbone ;
- k représente un nombre entier supérieur ou égal à 1, de préférence supérieur ou égal à 2, avantageusement compris de 5 à 60, et de préférence de 5 à 40 ;
- k' représente un nombre entier avantageusement compris de 0 à 60, et de préférence de 5 à 40 ;
- $L_1$ et $L'_1$, identiques ou différents, représentent, indépendamment l'un de l'autre, un radical de formule $-[-L'-O-]_t-$, t représentant un nombre entier compris de 0 à 20, et L' représentant un radical alkylène, linéaire ou ramifié, comprenant de 3 à 10 atomes de carbone, L' représentant de préférence un radical $-CH(CH_3)-CH_2-$ ou $-(CH_2)_4-$, les t groupes L' pouvant être identiques ou différents ;
- $L_2$ et $L'_2$, identiques ou -différents, représentent, indépendamment l'un de l'autre, un radical bivalent alkylène, linéaire ou ramifié, comprenant avantageusement de 1 à 20 atomes de carbone, et représentant de préférence un radical $-CH(CH_3)-CH_2-$ ou $-CH_2-CH(CH_3)-$.

4. Composition selon l'une quelconque des revendications 1 à 3, **caractérisée en ce que** la composition comprend de 3% à 30% en poids de tensioactif et de 70% à 97% en poids de (poly)isocyanate.

5. Composition selon l'une quelconque des revendications 1 à 4, **caractérisée en ce que** le (poly)isocyanate est un (poly)isocyanate présentant une fonctionnalité moyenne en fonctions isocyanates au moins égale à 2 et au plus égale à 20, de préférence comprise de 2,2 à 10, et avantageusement comprise de 3 à 6.

6. Composition selon l'une quelconque des revendications 1 à 5, **caractérisée en ce qu'**elle contient en outre un solvant, la quantité de solvant par rapport à la quantité du mélange formé par le système tensioactif et le (poly) isocyanate étant inférieure à 50% en poids, et de préférence inférieure à 40% en poids, le solvant étant choisi dans le groupe constitué des esters, des éthers, des acétals, des carbonates cycliques ou linéaires, des lactones, des éthers de glycol ou de propylène glycol et des N-alkyl-amides.

7. Composition selon l'une quelconque des revendications 1 à 6, comprenant en outre au moins un composé porteur d'au moins une fonction à hydrogène mobile choisie parmi les fonctions hydroxyles primaires ou secondaires, phénols, amines primaires, et/ou secondaires, carboxyliques et fonction SH, et le cas échéant au moins un solvant organique.

8. Composition selon la revendication 7, comprenant :

- de 10 % à 60 % en poids de (poly)isocyanate, par rapport au poids total de la composition sans solvant, (% sur sec) ;
- de 0,25 % à 12 % en poids de tensioactif, par rapport au poids total de la composition sans solvant (% sur sec) ;
- de 30% à 80% en poids de composé porteur d'au moins une fonction à hydrogène mobile, par rapport au poids total de la composition sans solvant (% sur sec) ; et
- de 0% à 30% en poids de solvant organique, par rapport au poids total de la composition.

9. Composition selon l'une des revendications 7 ou 8, **caractérisée en ce que** le composé porteur d'au moins une fonction à hydrogène mobile est un polymère contenant au moins deux fonctions hydroxyles (alcool ou phénol)

et/ou fonctions thiols et/ou des fonctions amines primaires ou secondaires et/ou contenant des fonctions précurseurs, de type époxy ou carbonates qui, par réaction avec un nucléophile adéquat, libèrent les fonctions hydroxyles.

**10.** Composition selon la revendication 9, **caractérisée en ce que** le composé porteur d'au moins une fonction à hydrogène mobile est un polyol choisi parmi les polymères acryliques ou polyesters ou polyuréthanes.

**11.** Composition selon la revendication 10, **caractérisée en ce que** le polyol présente une fonctionnalité en groupes à hydrogènes mobiles au moins égale à 2, en général comprise de 2 à 100, et de préférence de 2 à 30.

**12.** Procédé de préparation d'une composition selon l'une quelconque des revendications 1 à 6, comprenant une étape de mélange des composés de formules (I) et (II), de l'amine et du (poly)isocyanate.

**13.** Procédé de fabrication d'un substrat revêtu, **caractérisé en ce qu'**il comprend une étape d'application sur un substrat d'une composition selon l'une quelconque des revendications 7 à 11, et une étape de réticulation par traitement thermique de ladite composition.

**14.** Substrat revêtu susceptible d'être obtenu par le procédé selon la revendication 13.

## Claims

**1.** Composition comprising:

- at least one (poly)isocyanate and
- at least one surfactant comprising an amine and a mixture of compounds based on the following formulae (I-1) and (II-1):

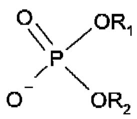

(I-1)

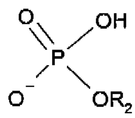

(II-1)

in which:
- $R_1$ and $R_2$ are the same or different and represent, independently, a hydrocarbon chain advantageously selected from $C_6$-$C_{30}$ aryl groups and $C_1$-$C_{20}$ alkyl groups, optionally substituted, advantageously $C_4$-$C_{10}$ alkyl groups, optionally substituted;

said mixture of compounds of formulae (I-1) and (II-1) being **characterised in that** the molar ratio between compound (II-1) and compound (I-1) is greater than 1, and is preferably from 1 to 10, advantageously from 2 to 6.

**2.** Composition according to claim 1, **characterised in that** the amine is an amine of the following formula (III):

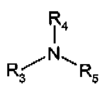

(III)

in which $R_3$, $R_4$ and $R_5$ represent, Independently, H or a hydrocarbon chain advantageously selected from $C_6$-$C_{30}$ aryl groups and $C_1$-$C_{20}$ alkyl groups, optionally substituted, the $R_3$, $R_4$ and $R_5$ groups optionally comprising at least one alkylene oxide group and preferably at least one ethylene oxide group.

**3.** Composition according to either claim 1 or claim 2, **characterised in that** the amine is based on the following formula (III-1):

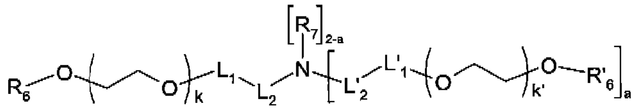

(III-1)

in which:

a is equal to 0, 1 or 2;
- $R_7$ represents a hydrogen atom or a hydrocarbon chain advantageously selected from the cyclic or non-cyclic $C_1$-$C_{20}$ alkyl groups, preferably from the $C_1$-$C_4$ alkyl groups, or from the aryl groups comprising from 6 to 30 carbon atoms; and when a = 0 the $R_7$ groups may be the same or different and may optionally form a cyclic structure comprising from 3 to 5 carbon atoms;
- $R_6$ and $R'_6$ are identical or different and represent a hydrogen atom or a hydrocarbon chain advantageously selected from the $C_1$-$C_{20}$ alkyl groups, preferably from the $C_1$-$C_4$ alkyl groups, or from the aryl groups comprising from 6 to 30 carbon atoms;
- k represents an integer greater than or equal to 1, preferably greater than or equal to 2, advantageously from 5 to 60, preferably from 5 to 40;
- k' represents an integer advantageously from 0 to 60, preferably from 5 to 40;
- $L_1$ and $L'_1$ are the same or different and represent, independently, a radical of formula $-[-L'-O-]_t-$, t being an integer from 0 to 20, and L' being a linear or branched alkylene radical comprising from 3 to 10 carbon atoms, L' preferably being a $-CH(CH_3)-CH_2-$ or $-(CH_2)_4-$ radical, the t L' groups being the same or different;
- $L_2$ and $L'_2$ are the same or different and represent, independently, a linear or branched divalent alkylene radical advantageously comprising from 1 to 20 carbon atoms and preferably being a $-CH(CH_3)-CH_2-$ or $-CH_2-CH(CH_3)-$ radical.

**4.** Composition according to any one of claims 1 to 3, **characterised in that** the composition comprises from 3 to 30 % by weight surfactant and from 70 to 97 % by weight (poly)isocyanate.

**5.** Composition according to any one of claims 1 to 4, **characterised in that** the (poly)isocyanate is a (poly)isocyanate having an average functionality of isocyanate functions at least equal to 2 and at most equal to 20, preferably from 2.2 to 10, and advantageously from 3 to 6.

**6.** Composition according to any one of claims 1 to 5, **characterised in that** it also contains a solvent, the amount of solvent in relation to the amount of the mixture formed by the surfactant system and the (poly)isocyanate being lower than 50 % by weight and preferably lower than 40 % by weight, the solvent being selected from the group formed of esters, ethers, acetals, cyclic or linear carbonates, lactones, glycol or propylene glycol ethers and N-alkyl amides.

**7.** Composition according to any one of claims 1 to 6, further comprising at least one compound carrying at least one mobile hydrogen function selected from the primary or secondary hydroxyl, phenol functions, primary and/or secondary amine functions, carboxylic functions and 5H functions and, optionally, at least one organic solvent.

**8.** Composition according to claim 7, comprising:

- from 10 to 60 % by weight (poly)isocyanate, relative to the total weight of the composition without solvent. (% dry weight);
- from 0.25 to 12 % by weight surfactant, relative to the total weight of the composition without solvent, (% dry weight);
- from 30 to 80 % by weight compound carrying at least one mobile hydrogen function, relative to the total weight of the composition without solvent (% dry weight); and
- from 0 % to 30 % by weight organic solvent, relative to the total weight of the composition.

**9.** Composition according to either claim 7 or 8, **characterised in that** the compound carrying at least one mobile hydrogen function is a polymer containing at least two hydroxyl functions (alcohol or phenol) and/or thiol functions and/or primary or secondary amine functions and/or containing precursor functions of the epoxy or carbonate type which, upon reaction with a suitable nucleophile, free the hydroxyl functions.

**10.** Composition according to claim 9, **characterised in that** the compound carrying at least one mobile hydrogen

function is a polyol selected from the acrylic or polyester or polyurethane polymers.

11. Composition according to claim 10, **characterised in that** the polyol has a functionality of mobile hydrogen groups at least equal to 2, generally from 2 to 100, preferably from 2 to 30.

12. Process for preparing a composition according to any one of claims 1 to 6, comprising a step of mixing the compounds of formulae (I) and (II), the amine and the (poly)isocyanate.

13. Process for producing a coated substrate, **characterised in that** it comprises a step of applying a composition according to any one of claims 7 to 11 to a substrate and a step of cross-linking by thermal treatment of said composition.

14. Coated substrate obtainable by the process according to claim 13.

## Patentansprüche

1. Zusammensetzung, enthalten:

   - mindestens ein (Poly)Isocyanat und
   - mindestens ein Tensid, enthaltend ein Amin und eine Mischung von Verbindungen der folgenden Formeln (I-1) und (II-1):

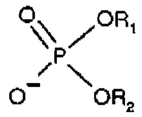
(I-1)

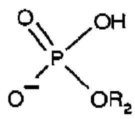
(II-1)

   worin:

   - $R_1$ und $R_2$ gleich oder verschieden sind und unabhängig voneinander für eine auf Kohlenwasserstoff basierende Kette stehen, die vorteilhafterweise unter $C_6$-$C_{30}$-Arylgruppen und $C_1$-$C_{20}$-Alkylgruppen, die gegebenenfalls substituiert sind, vorteilhafterweise $C_4$-$C_{10}$-Alkylgruppen, die gegebenenfalls substituiert sind, ausgewählt ist;

   wobei die Mischung von Verbindungen der Formeln (I-1) und (II-1) **dadurch gekennzeichnet ist, dass** das Molverhältnis zwischen der Verbindung (II-1) und der Verbindung (I-1) über 1 und vorzugsweise zwischen 1 und 10 und besonders bevorzugt zwischen 2 und 6 liegt.

2. Zusammensetzung nach Anspruch 1, **dadurch gekennzeichnet, dass** es sich bei dem Amin um ein Amin der folgenden Formel (III) handelt:

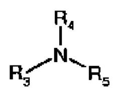
(III)

   worin $R_3$, $R_4$ und $R_5$ unabhängig voneinander für H oder eine auf Kohlenwasserstoff basierende Kette stehen, die vorteilhafterweise unter $C_6$-$C_{30}$-Arylgruppen und $C_1$-$C_{20}$-Alkylgruppen, die gegebenenfalls substituiert sind, ausgewählt ist;
   wobei die Gruppen $R_3$, $R_4$ und $R_5$ gegebenenfalls mindestens eine Alkylenoxidgruppe und vorzugsweise mindestens eine Ethylenoxidgruppe enthält.

3. Zusammensetzung nach einem der Ansprüche 1 oder 2, **dadurch gekennzeichnet, dass** das Amin der folgenden Formel (III-1) entspricht:

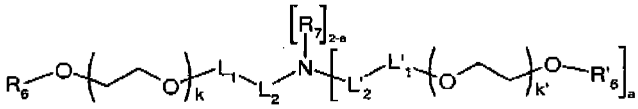 (III-1)

worin:

- a gleich 0, 1 oder 2 ist;
- $R_7$ für ein Wasserstoffatom oder eine auf Kohlenwasserstoff basierende Kette steht, die vorteilhafterweise unter cyclischen oder acyclischen $C_1$-$C_{20}$-Alkylgruppen und vorzugsweise unter $C_1$-$C_4$-Alkylgruppen oder unter Arylgruppen mit 6 bis 30 Kohlenstoffatomen ausgewählt ist, und im Fall von a = 0 die Gruppen $R_7$ gleich oder verschieden sein können und gegebenenfalls miteinander einen Ring mit 3 bis 5 Kohlenstoffatomen bilden können;
- $R_6$ und $R'_6$ gleich oder verschieden sind und für ein Wasserstoffatom oder eine auf Kohlenwasserstoff basierende Kette stehen, die vorteilhafterweise unter $C_1$-$C_{20}$-Alkylgruppen und vorzugsweise unter $C_1$-$C_4$-Alkylgruppen oder unter Arylgruppen mit 6 bis 30 Kohlenstoffatomen ausgewählt ist,;
- k für eine ganze Zahl größer gleich 1, vorzugsweise größer gleich 2, vorteilhafterweise 5 bis 50 und vorzugsweise 5 bis 40 steht;
- k' für eine ganze Zahl, besonders bevorzugt von 0 bis 60 und vorzugsweise 5 bis 40 steht;
- $L_1$ und $L'_1$ gleich oder verschieden sind und unabhängig voneinander für einen Rest der Formel
- $[-L'-O-]_t$- stehen, wobei t für eine ganze Zahl von 0 bis 20 steht und L' für einen linearen oder verzweigten Alkylenrest mit 3 bis 10 Kohlenstoffatomen steht, wobei L' bevorzugt für einen $-CH(CH_3)-CH_2-$ oder $-(CH_2)_4$-Rest steht, wobei die t Gruppen L' gleich oder verschieden sein können;
- $L_2$ und $L'_2$ gleich oder verschieden sind und unabhängig voneinander für einen linearen oder verzweigten zweiwertigen Alkylenrest stehen, der vorteilhafterweise 1 bis 20 Kohlenstoffatome enthält und vorzugsweise für einen $-CH(CH_3)-CH_2-$ oder $-CH_2-CH(CH_3)$-Rest steht.

**4.** Zusammensetzung nach einem der Ansprüche 1 bis 3, **dadurch gekennzeichnet, dass** die Zusammensetzung 3 bis 30 Gew.-% Tensid und 70 bis 97 Gew.-% (Poly)Isocyanat enthält.

**5.** Zusammensetzung nach einem der Ansprüche 1 bis 4, **dadurch gekennzeichnet, dass** es sich bei dem (Poly) Isocyanat um ein (Poly)isocyanat mit einer durchschnittlichen Funktionalität von Isocyanatfunktionen von mindestens 2 und höchstens 20, vorzugsweise von 2,2 bis 10 und besonders bevorzugt 3 bis 6 handelt.

**6.** Zusammensetzung nach einem der Ansprüche 1 bis 5, **dadurch gekennzeichnet, dass** sie außerdem ein Lösungsmittel enthält, wobei die Lösungsmittelmenge, bezogen auf die Menge der durch das Tensidsystem und das (Poly)Isoayanat gebildeten Mischung, weniger als 50 Gew.-% und vorzugsweise weniger als 40 Gew.-% beträgt, wobei das Lösungsmittel aus der Gruppe bestehend aus Estern, Ethern, Acetalen, cyclischen oder linearen Carbonaten, Lactonen, Glykol- oder Propylenglykolethern und N-Alkylamiden ausgewählt ist.

**7.** Zusammensetzung nach einem der Ansprüche 1 bis 6, **dadurch gekennzeichnet, dass** sie außerdem mindestens eine Verbindung mit mindestens einer Funktion mit mobilem Wasserstoff, die unter primären oder sekundären Hydroxylfunktionen, Phenolfunktionen, primären und/oder sekundären Aminofunktionen, Carboxylfunktionen und SH-Funktionen ausgewählt ist, und gegebenenfalls mindestens ein organisches Lösungsmittel umfasst.

**8.** Zusammensetzung nach Anspruch 7, umfassend:

- 10 bis 60 Gew.-% (Poly)Isocyanat, bezogen auf das Gesamtgewicht der Zusammensetzung ohne Lösungsmittel (% Trockengewicht);
- 0,25 bis 12 Gew.-% Tensid, bezogen auf das Gesamtgewicht der Zusammensetzung ohne Lösungsmittel (% Trockengewicht);
- 30 bis 80 Gew.-% Verbindung mit mindestens einer Funktion mit mobilem Wasserstoff, bezogen auf das Gesamtgewicht der Zusammensetzung ohne Lösungsmittel (% Trockengewicht); und
- 0 bis 30 Gew.-% organisches Lösungsmittel, bezogen auf das Gesamtgewicht der Zusammensetzung.

**9.** Zusammensetzung nach einem der Ansprüche 7 oder 8, **dadurch gekennzeichnet, dass** es sich bei der Verbindung mit mindestens einer Funktion mit mobilem Wasserstoff um ein Polymer mit mindestens zwei Hydroxylfunktionen (Alkohol- oder Phenolfunktionen) und/oder Thiolfunktionen und/oder primären oder sekundären Aminfunktionen

und/oder mit Vorläuferfunktionen vom Epoxid- oder Carbonattyp, die durch Reaktion mit einem geeigneten Nucleophil die Hydroxylfunktionen freisetzen, handelt.

10. Zusammensetzung nach Anspruch 9, **dadurch gekennzeichnet, dass** es sich bei der Verbindung mit mindestens einer Funktion mit mobilem Wasserstoff um ein Polyol, das unter Acrylpolymeren oder Polyestern oder Polyurethanen ausgewählt ist, handelt.

11. Zusammensetzung nach Anspruch 10, **dadurch gekennzeichnet, dass** das Polyol eine Funktionalität von Gruppen mit mobilen wasserstoffatomen von mindestens 2, im Allgemeinen zwischen 2 und 100 und vorzugsweise 2 bis 30 aufweist.

12. Verfahren zur Herstellung einer Zusammensetzung nach einem der Ansprüche 1 bis 6, bei dem man die Verbindungen der Formel (I) und (II), das Amin und das (Poly)Isocyanat mischt.

13. Verfahren zur Herstellung eines beschichteten Substrats, **dadurch gekennzeichnet, dass** man auf ein Substrat eine Zusammensetzung nach einem der Ansprüche 7 bis 11 aufbringt und die Zusammensetzung durch thermische Behandlung vernetzt.

14. Beschichtetes Substrat, das durch das verfahren nach Anspruch 13 erhältlich ist.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*


### Documents brevets cités dans la description

- WO 9731960 A
- WO 9856843 A

### Littérature non-brevet citée dans la description

- **Z. WICKS.** *Prog. Org. Chem.,* 1975, vol. 3, 73
- *Prog. Org. Chem.,* 1989, vol. 9, 7
- **PETERSEN.** Justus Liebigs, Annalen der Chemie. 1949, vol. 562, 205
- **GOTTFRIED W. EHRENSTEIN ; FABIENNE MONTAGNE.** Matériaux polymères, structure, propriétés et applications. Hermès Science, 2000
- **MICHAEL SZYCHER.** Handbook of Polyuréthanes. CRC press, 1999
- **D. STOYE ; W. FREITAG.** Resins for coatings, Chemistry, Properties and Applications. Hanser, 1996
- Specialty Resins, creating the solution together. AKZO NOBEL RESINS, Février 2001
- High solids hydroxy acrylics and tightly controled molecular weight. *recueil de conférences de Eurocoat,* 1997, 505-515